# EUROPEAN PATENT APPLICATION

(11) **EP 3 321 665 A1**
(43) Date of publication of application: **16.05.2018**
(21) Application number: 17201165.2
(22) Date of filing: 10.11.2017
(51) Int. Cl.: G01N 21/65, B82Y 40/00

(54) **PROCEDURE TO MAKE SUBSTRATE TO PERFORM ANALYSES, CORRESPONDING SUBSTRATE AND METHOD OF ANALYSIS**

(30) Priority: 11.11.2016 IT 201600114276
(71) Applicant: Universita Degli Studi di Trieste, 34127 Trieste (IT); Centro Di Riferimento Oncologico, 33081 Aviano (IT)
(72) Inventor: BONIFACIO, Alois, 34123 Trieste (TS) (IT); SERGO, Valter, 34136 Trieste (TS) (IT); DALLA MARTA, Silvia, 33028 Tolmezzo (UD) (IT); CERVO, Silvia, 33082 Azzano Decimo (PN) (IT); SPIZZO, Riccardo, 33081 Aviano (PN) (IT); COLOMBATTI, Alfonso, 33081 Aviano (PN) (IT)
(74) Representative: Petraz, Gilberto Luigi

(57) **Abstract**

Substrate (10) to perform analyses of a sample of biofluid (11) to obtain information (20) correlated to at least a possible evident pathological condition, or to be identified or verified, associated with said sample of biofluid (11), comprising a base layer (12) and a metal layer (13) having a plurality of metal nanoparticles (NP), wherein the base layer (12) comprises cellulose with a mean porosity of less than 4µm, in particular less than 3µm, even more in particular comprised between 1µm and 3µm. The present invention also concerns a method to make the substrate (10), as well as a method to analyze a sample of biofluid (11) using the substrate (10).

## Description

### FIELD OF THE INVENTION

Embodiments of the present invention concern a procedure to make a substrate, or a support, for analyzing a sample of biofluid, such as for example blood samples, serum, plasma, urine, saliva, sputum, sweat, breast milk, bile, cerebrospinal fluid, ascitic fluid, cytosol or other biofluid, whether it is excreted, secreted, developed as a result of a pathology, or other type.

Embodiments of the present invention also concern a substrate that can be used to perform analysis of a sample of biofluid in order to obtain information on a correlated condition.

The present invention also concerns the corresponding method for analyzing a sample of biofluid using the substrate.

In particular, the substrates can be used to perform spectroscopic analyses, such as for example Surface Enhanced Raman Spectroscopy/Scattering (SERS), or other specific analyses.

### BACKGROUND OF THE INVENTION

Various substrates are known, for biofluid analysis, used to obtain information related to the sample analyzed, for example information connected to a pathological condition of a subject, such as tumorous conditions, or other.

One of the known analysis techniques for obtaining information correlated to a pathological condition of a subject is the Surface Enhanced Raman Spectroscopy/Scattering (SERS), which has the advantage that it does not require direct involvement of the subject, such as for example mammography, or other invasive or semi-invasive analysis techniques.

Various substrates are known, which can be used in SERS spectroscopy, thanks to which it is possible, once the type of biofluid to be analyzed is deposited on them, to obtain a Raman spectrum from which it is possible to extrapolate information correlated to the biofluid.

However, known substrates do not only not guarantee the quality and repeatability of the analyses or the clarity of the result, they also require long and complex production and preparation processes, which are very burdensome both from an energy and economic point of view.

Another problem of known substrates is that they can normally only be used after filtering the sample of biofluid and/or subjecting the latter to specific pre-treatments to eliminate unwanted substances from it, such as for example proteins. This involves considerable costs and long times, at times unacceptable, as well as loss and/or alteration of information due to the loss/addition of substances due to such treatments.

It is known that known substrates, in particular colloidal ones, require the formation of aggregates so that a reliable spectroscopic detection is obtained.

Furthermore, some known substrates for SERS analysis normally do not allow sufficient amplification of the Raman signal measured, and this entails a probable erroneous detection of the peaks of the Raman spectrum correlated to the substances contained in the biofluid analyzed. In other substrates, although it is possible to amplify the Raman signal measured, they are very expensive and have a poor level of repeatability.

Moreover, the results obtainable with such known substrates depend significantly on the single substrate used and also show poor levels of accuracy, sensitivity and specificity, as well as taking a long time.

There are many known solutions that have the above problems and do not allow to obtain satisfactory results for the purposes that the present invention sets itself.

For example, the prior art document Min-Liang Cheng et al., Analytica chimica acta, Elsevier, vol.708, no.1 p. 89-96, 2011 (Cheng 2011) describes a method to obtain a substrate directly on a layer of paper, referred to in the field as "silver mirror reaction", which, in addition to having some of the above problems, does not allow to obtain substrates with the same properties.

The Cheng 2011 document also describes, as a direct application of the substrate thus obtained, a quantitative analysis of a molecule, that is, tyrosine in aqueous solution.

The Cheng 2011 document does not address the issues of analyses of a complex sample of biofluid that have multiple components that can interfere with the analysis, such as for example blood, serum, plasma, nor the use in analyses to determine the possible pathological condition associated with the sample analyzed.

It is known that tyrosine levels can be altered by pathological conditions, but it is also known that there is no biunivocal correspondence that if a sample has high tyrosine values then it is associated with a certain pathological condition.

The prior art document US-A-2016/061735 (US'735) describes a method of a field different from that to which the present invention refers, since it is a physical and non-chemical method in which sputtering and laser ablation are used.

US'735 does not describe analytical applications for the analysis of biofluids with a complex matrix, where it is possible to detect more than one analyte at the same time.

Furthermore, US'735 concerns molecules in the environment and not samples of biofluid to which the present invention refers.

The prior art document Cheng Jing et al., Sensors and actuators B, vol.191, p. 485-490, 2014 (Jing 2014) describes a physical method of forming substrates, namely Oblique Angle Deposition, with an electron beam evaporator.

The method described by Jing 2014 provides a formation of silver nanoparticles on a base layer in situ, which does not allow to control the quality of the nanoparticles formed on the base layer.

The Jing 2014 document does not describe analyses of biofluids with a complex matrix but simple analyses of a bacterium in an aqueous suspension.

The prior art document by Wu et al., Spectrochemistry acta. Part A: Molecular and Biomolecular Spectroscopy, vol. 60, no. 8-9, p. 1845-1852, 2004 (Wu 2004) describes methods of analysis not of biofluids but of simple substances in an aqueous solution that do not have the same problems as samples with a complex matrix.

The prior art document US-A-2013/107254 (US'254) describes a method to obtain a substrate that provides to use an ink jet printer on pretreated paper.

In addition to being energy-intensive, this known solution has many problems connected to the quality of the nanoparticles that are deposited on the pre-treated paper.

Moreover, the solution described in US'254 allows to detect only one single analyte at a time and not several analytes present simultaneously in a sample of biofluid.

The prior art document Ying Hui Ngo et al., Advances in colloid and interface science, Elsevier, vol. 163, no. 1, pages 23-38, 2011 (Ngo 2011) describes in generic terms without any specification of the production method, the doses of the substances used, the execution times of the steps and the properties of the substrate's final layers. Therefore, the Ngo 2011 document only describes known techniques for which it does not provide details.

The prior art document WO-A-2016/085911 (WO'911) describes bio-recognition sensors in which there is a metal layer covered with proteins able to recognize the analyte of interest.

These known sensors, as well as being very complex and expensive, require methods to obtain them which are very costly both in economic terms, energy and of the substances used.

There is therefore a need to perfect and provide a procedure to make a substrate to analyze a sample of biofluid, a substrate, and a method of analysis using the substrate, which overcome at least one of the disadvantages of the state of the art.

The purpose of the present invention is to provide a substrate for analyzing a sample of biofluid that allows to obtain reliable results quickly, even with a reduced or zero number of pre-treatments, with high levels of accuracy, sensitivity and specificity and which is stable over time.

Another purpose of the present invention is to provide a procedure to make a substrate that is not uneconomical from an energy point of view, meaning for example that the analysis takes less time, and is also economical. It is also a purpose of the present invention to provide a method to analyze the substrate that allows to obtain information from a sample of biofluid correlated with a pathological condition, such as for example a tumor or other, and at the same time is not invasive or semi-invasive, for a subject. It derives from said method of analysis that it is possible to detect pathological conditions, for example tumors, using limited quantities of biofluid.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns a procedure to make a substrate to perform analyses of a sample of biofluid to obtain information correlated to at least a possible pathological condition associated with the sample of biofluid.

According to possible embodiments, the sample of biofluid can advantageously be chosen from a group consisting of blood, serum, plasma, urine, saliva, sputum, sweat, breast milk, bile, cerebrospinal fluid, ascitic fluid, cytosol and combinations thereof.

The sample of biofluid can be of a complex nature, or a complex matrix, that is, it can comprise a plurality of components even very different from each other.

According to possible embodiments, the sample of biofluid can comprise a biological fluid.

According to possible embodiments, the sample of biofluid can comprise an excreted biofluid, such as for example urine, sweat or saliva.

According to possible embodiments, the sample of biofluid can comprise a secreted biofluid, such as for example breast milk or bile.

According to possible embodiments, the sample of biofluid can comprise a biofluid, such as for example blood, cerebrospinal fluid, ascitic fluid or other bodily or cell fluids.

Advantageously, the sample of biofluid may not be pre-treated and/or filtered.

According to possible embodiments, the substrate comprises a base layer and a metal layer with a plurality of metal nanoparticles.

In accordance with one aspect of the present invention, the base layer comprises cellulose with a mean porosity of less than 4µm.

According to possible embodiments, the metal nanoparticles comprise at least a transition metal and have a mean size less than 400nm.

In accordance with one aspect of the present invention, the procedure to make the substrate comprises a step of synthesizing the metal nanoparticles in an aqueous solution to obtain a colloidal dispersion to cover one or more base layers and form said substrate.

According to the present invention, the colloidal dispersion is transformed into a concentrated liquid solution of metal nanoparticles with a greater concentration with respect to the colloidal dispersion.

According to possible embodiments, the concentrated solution of metal nanoparticles can be liquid.

According to possible embodiments, the step of covering the base layer with the metal nanoparticles contained in the concentrated liquid solution with at least a coagulant allows to form a substrate, in which the metal layer is formed above the base layer.

According to possible solutions, the covering step provides to immerse one or more base layers in the concentrated liquid solution with sodium citrate as coagulant.

For example, the base layers can be located on the bottom of a container in which the concentrated liquid solution with sodium nitrate is poured.

The metal layer forms above the base layer by depositing the metal nanoparticles contained in the concentrated liquid solution through gravity.

According to possible formulations of the present invention, the method to perform predictive analyses of a sample of biofluid using said substrate initially provides to make available a set of reference data correlated to one or more pathological conditions.

According to possible embodiments, the set of reference data is a set of spectral data obtained from a set of samples of biofluid of which the condition, either pathological or non-pathological, is known.

The set of reference data can be obtained by performing spectral analyses using a substrate according to one of the embodiments described.

According to possible embodiments, the set of reference data can be used to train a predictive method so that it can be used afterward to classify the spectrums acquired from other samples of biofluid.

In operational practice, the method to perform analyses provides to:
a - deposit a dose of sample of biofluid on the substrate as obtained above;
b - illuminate the dose of sample of biofluid on the substrate with monochromatic electromagnetic radiation (for example laser radiation) and acquire a spectrum of the Raman light diffused;
c - process the spectrum obtained and classify it using a predictive model obtained from a set of reference data, also called "training set", to obtain information correlated to at least a pathological condition associated with the sample of biofluid.

### BRIEF DESCRIPTION OF THE DRAWINGS

These and other characteristics of the present invention will become apparent from the following description of some embodiments, given as a non-restrictive example with reference to the attached drawings wherein:

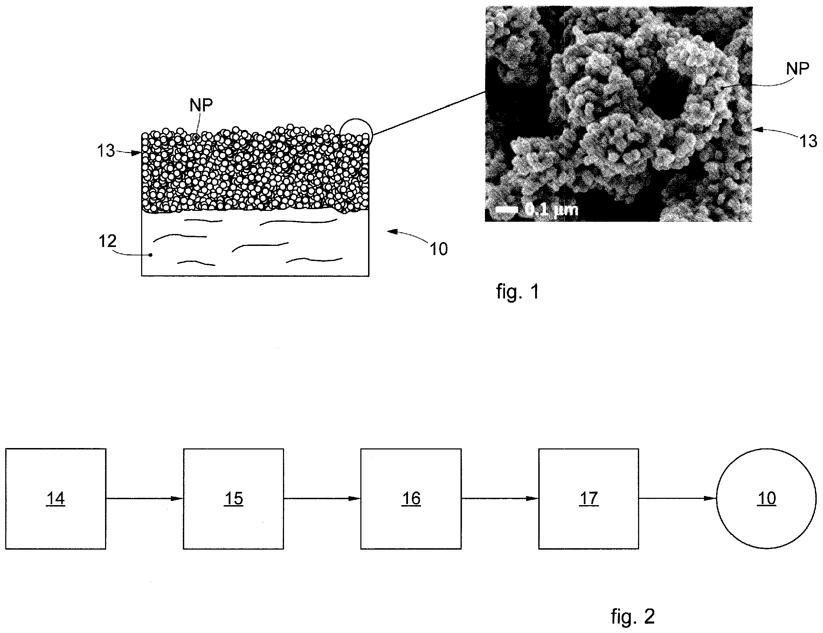

- fig. 1 shows a substrate and a detail of said substrate according to the present invention;
- fig. 2 shows a block diagram of a procedure to make a substrate according to the present invention;
- fig. 3 schematically shows a method to perform analyses of a sample of biofluid using a substrate according to possible formulations of the present invention;
- fig. 4 shows a block diagram of a method to perform analyses of a sample of biofluid using a substrate according to the present invention;
- fig. 5 shows two spectra obtained from the analysis of two samples of biofluid using a substrate according to the present invention.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

With reference to the drawings, which represent non-restrictive examples of the invention, we will now describe embodiments of a substrate 10 to perform analyses on a sample of biofluid 11 in order to obtain information correlated to a possible pathological condition to be identified or verified associated with the sample of biofluid 11.

According to possible embodiments, the substrate 10 can comprise a base layer 12 and a metal layer 13, in which the metal layer 13 has a plurality of metal nanoparticles NP.

Here and hereafter in the description, the term substrate 10 means a nano-structured metal substrate 10 having one or more characteristics according to any of the embodiments described herein.

Furthermore, with reference to the drawings, we will now describe embodiments of a procedure to make the substrate 10, as well as a method to analyze a sample of biofluid 11 using the substrate 10.

Here and hereafter in the description, the term sample of biofluid 11 means, for example, a sample of blood, serum, plasma, or other biofluid.

In particular, according to an advantageous aspect of the present invention, the sample of biofluid 11 used to obtain information 20 correlated with a possible pathological condition associated with the sample of biofluid 11 does not require filtration and/or pre-treatment, for example if the sample of biofluid 11 is blood, to remove substances such as for example proteins. As will be apparent from the description, thanks to the amplification effect of the response signal of the sample of biofluid 11 induced by the substrate 10, and in particular by the specific porosity of its base layer 12, the SERS spectroscopic analyses on a limited sample dose of biofluid 11 have high characteristics of accuracy, sensitivity and specificity.

The Applicant has studied and experimented the response signal obtainable by SERS spectroscopic analyses, which studies verified a surprising and unexpected amplification effect of the response signal induced by the porosity of the base layer 12 when the sample of biofluid 11 is subjected to a monochromatic electromagnetic radiation (EMR).

More precisely, the specific porosity of the base layer 12 allows the metal layer 13 to have a structure of the layers of metal nanoparticles NP more efficient due to amplification.

According to a possible embodiment, monochromatic electromagnetic radiation is a laser radiation that has high intensity and consistent radiation.

This effect allows to perform analyses on limited doses of samples of biofluid 11 without requiring pre-treatments on it, so that it reduces analysis times, simplifies the execution of the analysis, and increases the reliability of the information 20 obtainable compared to other invasive or semi-invasive analysis techniques, such as for example mammography or others.

In particular, according to possible embodiments, the substrate 10 can be used to perform analyses on a sample of biofluid 11 to obtain information 20 correlated to a possible tumorous pathological condition, such as breast cancer for example.

In accordance with possible embodiments, the base layer 12 comprises cellulose having a mean porosity of less than 4 µm.

In particular, according to possible embodiments, the base layer 12 has a mean porosity of less than 3µm, and even more particularly comprised between 1µm and 3µm.

According to possible embodiments, the base layer 12 can comprise one or more materials containing cellulose, such as for example paper, cellulose fibers or other similar material.

In accordance with possible embodiments, the metal nanoparticles NP comprise at least one transition metal.

The metal particles NP can comprise metal nanoparticles NP comprising one or more metals selected from the group comprising silver, gold, and copper.

According to possible embodiments, the metal nanoparticles NP can have various solid geometric shapes, such as for example spheres, spheroidal, pyramidal, prismatic or other complex shapes.

In accordance with possible embodiments, the metal nanoparticles NP can have a mean size of less than 400nm, in particular less than 300nm, even more particularly comprised between 20nm and 200nm.

According to possible formulations, the procedure to make a substrate 10 according to the present invention can provide:
- a step 14 of synthesizing the metal nanoparticles NP by reduction of at least one metal salt in aqueous solution to obtain a colloidal dispersion of metal nanoparticles NP;
- a centrifuging step 15 of the colloidal dispersion to obtain a solution with the liquid phase supernatant a concentrated colloid comprising the metal nanoparticles NP;
- a step 16 of removing part of the supernatant liquid phase to obtain a concentrated liquid solution of metal nanoparticles NP with a greater concentration than the synthetic colloidal dispersion;
- a step 17 of covering the base layer 12 with the metal nanoparticles NP contained in the concentrated liquid solution of metal nanoparticles NP with at least one coagulant to form the substrate 10.

According to possible embodiments, the synthesis step 14 provides to dissolve a quantity of at least one metal salt in ultra-pure water commonly defined in the field as "Type 1" according to the ISO 3696 standard, or MilliQ purified water.

In accordance with possible embodiments, the synthesis step 14 can provide to take the aqueous solution to the boil and to add a quantity of a sodium citrate solution or other reducing agent. According to possible embodiments, the synthesis step 14 provides that the addition of the sodium citrate solution is performed while the aqueous solution in which the metal salt is dissolved is under magnetic stirring.

According to possible embodiments, the synthesis step 14 can provide that the sodium citrate solution is added drop by drop.

In accordance with possible embodiments, the synthesis step 14 provides that the aqueous solution in which the metal salt is dissolved and to which the sodium citrate solution has been added is kept boiling and under magnetic stirring for less than 2 hours, in particular for a time comprised between 45 minutes and 1 hour and 15 minutes.

Subsequently, the synthesis step 14 provides to cool the colloidal dispersion to room temperature. The colloidal solutions of metal nanoparticles NP obtained are stored in the dark in a container, for example glass, and remain stable for months without altering their chemical-physical characteristics.

For example, the colloidal solutions obtained can be characterized by absorption spectroscopy with ultraviolet and/or visible electromagnetic radiations (UV-visible spectroscopy) and show a band of plasmonic absorption defined by the metal nanoparticles NP dispersed in solution.

The plasmonic absorption band remains substantially unchanged for months, making the metal nanoparticles NP stable over time.

According to possible embodiments of the present invention, the centrifuging step 15 provides to centrifuge the colloidal dispersion of metal nanoparticles NP for less than 1 hour, in particular for a time comprised between 15 minutes and 45 minutes, at a centrifugation speed of more than 8000 rpm (4293 g of relative centrifugal force, RCF).

According to possible embodiments, the centrifugation speed is comprised between 8000 rpm (4293 g of relative centrifugal force, RCF) and 150000 rpm (47309 g of relative centrifugal force, RCF).

These centrifugation parameters have been identified to allow the metal nanoparticles NP to concentrate at the bottom of the container where the colloidal dispersion is located, so as to form a concentrated colloid comprising the metal nanoparticles NP and a supernatant liquid phase.

According to possible embodiments, the removal step 16 is facilitated by the previous centrifuging step 15 since it is possible to obtain, with great precision, a concentrated liquid solution of metal nanoparticles NP according to the desired concentration. According to possible embodiments, the removal step 16 provides to obtain a concentrated liquid solution of metal nanoparticles NP with a concentration of at least 10 times in volume with respect to the colloidal dispersion.

In accordance with possible embodiments, the covering step 17 provides to dispose the base layer 12 at the bottom of a container, for example glass, and to add the concentrated liquid solution, or directly the colloidal dispersion, of metal nanoparticles NP, and a coagulant.

According to possible embodiments, the covering step 17 provides to dispose a plurality of base layers 12 inside a container, so as to obtain a plurality of substrates 10.

It is quite evident that if it is desired to obtain a plurality of substrates 10, the quantities of the substances employed will be scaled according to the number of substrates 10 to be obtained. For example, the coagulant can be sodium citrate with a concentration of 20mM.

The covering step 17 provides to stir the container in which there is the base layer 12, the concentrated liquid solution of metal nanoparticles NP and the coagulant, until the solute is dissolved.

Subsequently, the covering step 17 provides to let the metal nanoparticles NP deposit on the base layer 12 through gravity, keeping the container in the dark.

When the metal nanoparticles NP are deposited on the base layer 12 and have formed the metal layer 13, the supernatant can be extracted and the substrates 10 obtained are dried.

According to possible embodiments, in order to be able to use the substrates 10 at later times, it is possible to preserve the substrates 10 obtained in the dark and ultra-pure water type "1".

### EXAMPLE OF A PROCEDURE TO MAKE A SUBSTRATE.

According to a possible embodiment given by way of example, in order to obtain a metal layer 13 having metal nanoparticles NP of silver, the synthesis step 14 provides to dissolve 45mg of AgNO₃ in 250 mL of ultra-pure water "Type I", that is, purified MilliQ water.

The aqueous solution is brought to the boil and, under magnetic stirring, 5mL of a solution of 1% in weight of sodium citrate is added drop by drop.

The solution is kept boiling and stirred for 1 hour and then cooled to room temperature.

In this case, the colloidal dispersion is characterized by a plasmonic absorption band of 410 ± 5 nm, as the metal nanoparticles NP are silver.

The colloidal dispersion of silver nanoparticles NP is centrifuged for 30 minutes at 10000rpm (5300 g of relative centrifugal force, RCF) so as to concentrate the metal nanoparticles NP on the bottom of the dispersion container.

At this point, having separated the concentrated colloid from the liquid phase, it is possible to remove the supernatant to obtain a concentrated liquid solution of metal nanoparticles NP at a concentration 10 times in volume with respect to the colloidal dispersion.

In this case, the covering step 17 provides to dispose a base layer 12 of paper with a mean porosity of 2µm having a size of 1cm² in a container and then adding 3mL of sodium citrate to a concentration of 20mM.

After stirring the container so that the solute dissolves, the container is put in the dark for one week until the metal nanoparticles NP are deposited on the base layer 12 of paper and have formed the metal layer 13.

At this point it is possible to remove the supernatant and to dry the substrate 10 obtained so that it can be used to perform analyses on a sample of biofluid 11. It is quite clear that if a substrate 10 different from the one described in the example is to be obtained, the quantities and type of substances used differ from the example shown, depending on the type of metal nanoparticles NP of the metal layer 13 which is intended to be obtained.

According to possible formulations of the present invention, the substrates 10 obtained by the procedure described and with the characteristics of the present invention can be used to perform analyses to obtain information 20 correlated to a possible pathological condition to be identified or verified associated with the sample of biofluid.

According to possible embodiments, the analyses can be SERS spectroscopic analyses and the information 20 obtainable can be correlated to tumorous pathological conditions, such as for example breast cancer.

In accordance with possible embodiments, the method of analysis for analyzing a sample of biofluid 11 initially provides to make available a set of reference data correlated to one or more pathological conditions.

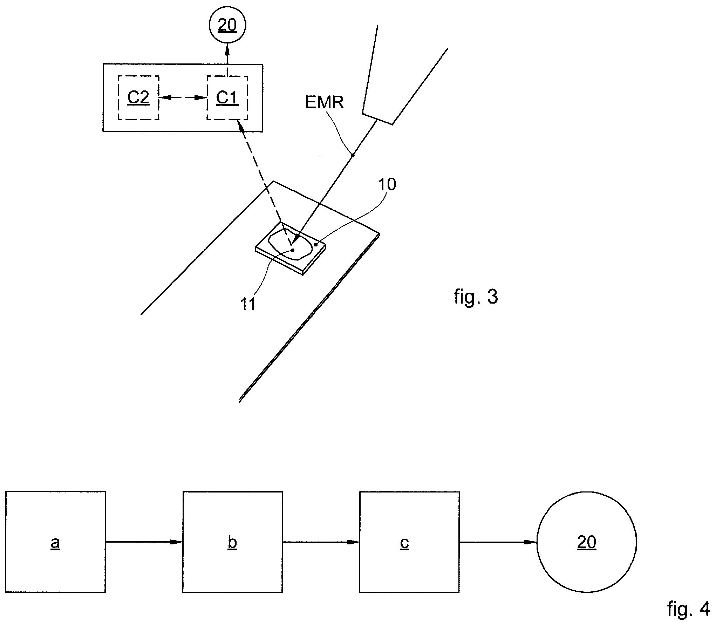

According to one aspect of the present invention, in operating practice, the method of analysis provides:
a - to deposit a sample dose of biofluid 11 on the substrate 10;
b - to illuminate the sample dose of biofluid 11 on the substrate 10 with a monochromatic electromagnetic radiation EMR and acquire a spectrum of Raman diffused light from the sample of biofluid 11;
c - to process the spectrum obtained (indicated in the diagram of fig. 3 with C1) and its classification (indicated in the diagram of Fig. 3 with C2) using a set of reference data to obtain information 20 correlated to at least one pathological condition associated with the sample of biofluid 11.

According to possible embodiments, the sample dose of biofluid 11 can be deposited directly on the substrate 10 and is comprised between 1µl and 1ml. The optimum quantity of biofluid 11 is about 5µl.

According to possible embodiments, the monochromatic electromagnetic radiation comprises visible electromagnetic radiation and/or infrared radiation and/or near infrared radiation.

The spectrum of Raman diffused light from the sample of biofluid 11 can be a Raman spectrum, that is, a spectrum comprising a plurality of peaks each corresponding to the specific Raman shift associated with the components of the sample of biofluid 11.

According to possible embodiments, the spectrum of Raman diffused light can be obtained by means of a portable Raman spectrograph.

These aspects allow to perform analyses even outside specialized laboratories, directly in outpatient clinics, thus avoiding dispatching the samples. Furthermore, they also allow to perform analyses quickly and at very low cost, and without the use of specialized personnel.

According to possible non-restrictive embodiments, the method of analysis provides to process the spectrum C1 obtained by applying a fourth degree polynomial correction and normalizing the spectrum obtained vectorally. According to possible embodiments, the method of analysis provides to classify the spectrum processed using a set of reference data C2, in which each reference datum or spectrum is associated with a specific pathological condition, as well as with a non-pathological control layer. According to possible embodiments, the set of reference data comprises a plurality of Raman spectra, each spectrum being associated with a tumorous pathological condition, for example, in various stages of development.

According to possible embodiments, the classification of the spectrum obtained is performed with one or more multivariate classification methods selected from a group comprising PCA-LDA, PCR-LDA, SVM, and NN (PCA: Principal Component Analysis, LDA: Linear Discriminant Analysis, PCR: Principal Component Regression, SVM: Supported Vector Machine, NN: Neural Networks).

In accordance with possible embodiments, using the method of analysis with the substrates 10 according to the present invention, it is possible to identify pathological tumorous conditions with respect to a non-pathological condition, that is, information 20 correlated to which specific condition is associated with the sample of biofluid 11 analyzed.

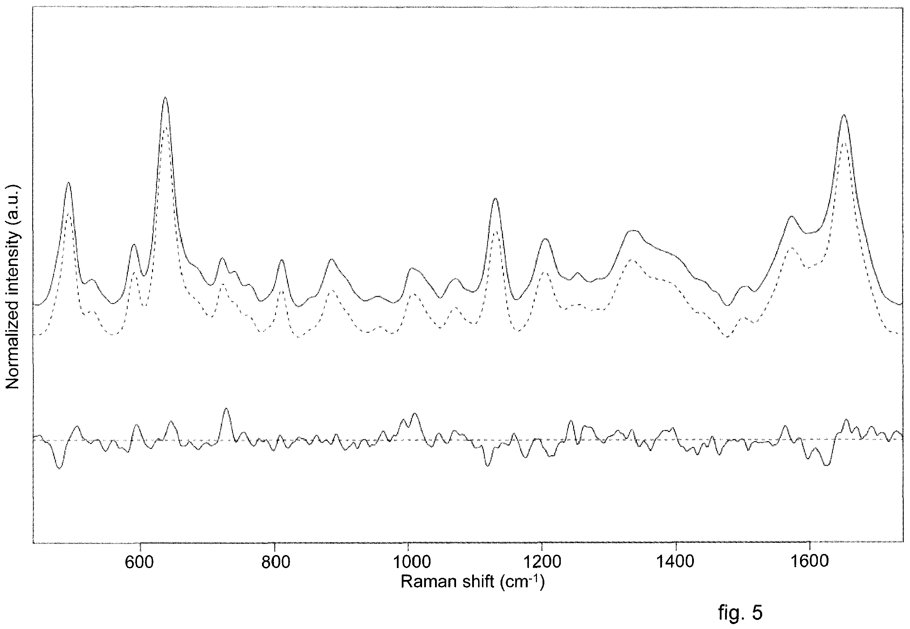

With reference to fig. 5, the dotted line is associated with a non-pathological condition, the continuous line is associated with a pathological condition and the continuous line below the two spectra shows the difference between them.

The spectra are amplified compared to those obtainable with known substrates and allow to use classification algorithms to distinguish even small differences between spectra associated with non-pathological conditions from spectra associated with pathological conditions.

The method of analyzing a sample of biofluid 11 using a substrate 10 in one of the described embodiments, valid for example for breast cancer, allows to distinguish two different pathological and non-pathological conditions with an accuracy of about 93%, a sensitivity of about 85% and a specificity of about 97%, in which the positive predictive value PPV and the negative predictive value NPV are about 85% and 97% respectively.

It is clear that modifications and/or additions of parts can be made to the substrate 10, the procedure to make the substrate and the connected method to analyze a sample of biofluid using said substrate as described heretofore, without departing from the field and scope of the present invention.

It is also clear that, although the present invention has been described with reference to some specific examples, a person of skill in the art shall certainly be able to achieve many other equivalent forms of the substrate, the procedure to make the substrate and the connected method to analyze a sample of biofluid using said substrate, having the characteristics as set forth in the claims and hence all coming within the field of protection defined thereby.

## Claims

1. Procedure to make a substrate (10) to perform analyses of a sample of biofluid (11) to obtain information (20) correlated to at least a possible pathological condition associated with said sample of biofluid (11), said substrate (10) comprising a base layer (12) and a metal layer (13), said procedure being **characterized in that** it comprises:
- a step of synthesizing (14) metal nanoparticles (NP) by reducing at least a metal salt in an aqueous solution to obtain a colloidal dispersion of said metal nanoparticles (NP);
- a step of centrifuging (15) said colloidal dispersion to obtain a solution with a supernatant liquid phase on a concentrated colloid comprising said metal nanoparticles (NP);
- a step of removing (16) part of said supernatant liquid phase to obtain a concentrated solution of metal nanoparticles (NP) with a concentration greater than said colloidal dispersion;
- a step of covering (17) a base layer (12) with said metal nanoparticles (NP) contained in said concentrated solution with at least a coagulant to form said substrate (10), wherein said base layer (12) comprises cellulose with a mean porosity of less than 4µm and said metal layer (13) formed on said base layer (12) comprises at least a transition metal and has a plurality of said metal nanoparticles (NP) with a mean size less than 400nm.

2. Procedure as in claim 1, **characterized in that** said synthesis step (14) provides to take the aqueous solution with at least said metal salt to boiling point, and to add a solution of sodium citrate drop by drop, keeping said aqueous solution under magnetic stirring.

3. Procedure as in claim 2, **characterized in that** said synthesis step (14) provides to keep said aqueous solution at boiling point and under magnetic stirring for a time less than 2 hours and then to cool to room temperature the colloidal dispersion obtained.

4. Procedure as in any claim hereinbefore, **characterized in that** said centrifuging step (15) provides to centrifuge said colloidal dispersion of metal nanoparticles (NP) for a time of less than 1 hour at a centrifugal speed of more than 8000rpm (4293g relative centrifugal force, RCF).

5. Procedure as in any claim hereinbefore, **characterized in that** said covering step (17) provides to immerse said base layer (12) in said concentrated solution with sodium citrate as coagulant, said covering step (17) being obtained by depositing said metal nanoparticles (NP) contained in said concentrated solution through gravity on said base layer (12).

6. Procedure as in any claim hereinbefore, **characterized in that** said base layer (12) comprises cellulose with a mean porosity of less than 3µm, in particular comprised between 1µm and 3µm.

7. Procedure as in any claim hereinbefore, **characterized in that** said metal layer (13) has a plurality of said metal nanoparticles (NP) with a mean size less than 300nm, in particular comprised between 20nm and 200nm.

8. Method to perform analyses of a sample of biofluid (11) to obtain information (20) correlated to at least a possible pathological condition associated with said sample of biofluid (11), using a substrate (10) made with a procedure as in any of the claims from 1 to 7, **characterized in that** said method initially provides to make available a set of reference data correlated to one or more pathological conditions, **and in that** in operational practice said method provides to:
a - deposit a dose of said sample of biofluid (11) on said substrate (10);
b - illuminate said dose of sample of biofluid (11) on said substrate (10) with monochromatic electromagnetic radiation (EMR) and acquire a spectrum of the Raman diffused light from said sample of biofluid (11);
c - process said spectrum obtained and classify it using a set of reference data to obtain information (20) correlated to at least a pathological condition associated with said sample of biofluid (11).

9. Method as in claim 8, **characterized in that** the classification of said spectrum obtained is performed with one or more multivariate classification methods chosen from a group comprising PCA-LDA, PCR-LDA, SVM, and NN.

10. Method as in claim 8 or 9, **characterized in that** said set of reference data comprises a plurality of Raman spectra, each spectrum being associated with a tumorous pathological condition.

11. Method as in any of the claims from 8 to 10, **characterized in that** said sample of biofluid (11) is not pre-treated and/or filtered.

12. Method as in any of the claims from 8 to 11, **characterized in that** said sample of biofluid (11) is chosen from a group consisting of blood, serum, plasma, urine, saliva, sputum, sweat, breast milk, bile, cerebrospinal fluid, ascitic fluid, cytosol, and combinations thereof.

13. Substrate obtained with a method as in any of the claims from 1 to 7 to perform analyses of a sample of biofluid (11) chosen from a group consisting of blood, serum, plasma, urine, saliva, sputum, sweat, breast milk, bile, cerebrospinal fluid, ascitic fluid, cytosol, and combinations thereof, to obtain information (20) correlated to at least a possible pathological condition associated with said sample of biofluid (11).
